# EUROPÄISCHE PATENTANMELDUNG

(11) **EP 4 656 030 A1**
(43) Veröffentlichungstag der Anmeldung: **03.12.2025**
(21) Anmeldenummer: 25167890.0
(22) Anmeldetag: 02.04.2025
(51) Int. Cl.: A01D 43/08

(54) **SELBSTFAHRENDE LANDWIRTSCHAFTLICHE ERNTEMASCHINE**

(30) Priorität: 29.05.2024 DE 102024115099
(71) Anmelder: CLAAS Selbstfahrende Erntemaschinen GmbH, 33428 Harsewinkel (DE)
(72) Erfinder: Penner, John, 48361 Beelen (DE); Strieker, Norbert, 33415 Verl (DE); Lutterbeck, Dennis, 48291 Telgte (DE); Schiewer, Stefan, 48231 Warendorf (DE); Wilken, Andreas, 49143 Bissendorf (DE); Bürger, Alexander, 33442 Herzebrock-Clarholz (DE); Deufel, Tobias, 88605 Meßkirch-Menningen (DE)
(74) Vertreter: CLAAS Gruppe

(57) **Zusammenfassung**

Die vorliegende Anmeldung betrifft eine selbstfahrende landwirtschaftliche Erntemaschine (1), insbesondere Feldhäcksler, umfassend einen Maschinenrahmen (2), eine an dem Maschinenrahmen (2) gelagerte Überladeeinrichtung (3) zur Überladung von verarbeitetem Erntegut an ein Transportfahrzeug, einen mit der Überladeeinrichtung (3) wirkverbundenen hydraulischen Aktor (4), wobei mittels des hydraulischen Aktors (4) die Überladeeinrichtung (3) um eine horizontale Drehachse (5) relativ zu dem Maschinenrahmen (2) verdrehbar ist und dadurch eine Position eines endseitigen Auslasses (6) der Überladeeinrichtung (3) in vertikale Richtung relativ zu dem Maschinenrahmen (2) veränderbar ist.

Um die Schwingung der Überladeeinrichtung während eines Erntebetriebs der Erntemaschine im Vergleich zum Stand der Technik mehr zu reduzieren, wird eine Steuer- und Regeleinrichtung (7) vorgeschlagen, die zur Regelung eines Schwingungsverhaltens der Überladeeinrichtung (3) eingerichtet ist mit dem Ziel, Schwingungen der Überladeeinrichtung (3) zu dämpfen, wobei die Steuer- und Regeleinrichtung (7) dazu vorgesehen und eingerichtet ist, zur Dämpfung der Schwingungen der Überladeeinrichtung (3) eine Stellgröße zur Ansteuerung eines Proportionalventils (8) zu ermitteln, das mit dem hydraulischen Aktor (4) wirkverbunden ist und zur Einstellung eines Volumenstroms von Hydraulikfluid zu dem hydraulischen Aktor (4) eingerichtet ist.

## Beschreibung

Die vorliegende Anmeldung betrifft eine selbstfahrende landwirtschaftliche Erntemaschine gemäß dem Oberbegriff von Anspruch 1.

Bei der Erntemaschine kann es sich insbesondere um einen selbstfahrenden Feldhäcksler handeln. Dieser wird dazu verwendet, auf einem Feld aufstehende Pflanzen zu ernten und zu häckseln und das auf diese Weise gebildete Erntegut, das von den gehäckselten Pflanzen gebildet ist, auf ein Transportfahrzeug überzuladen. Dieses Überladen findet fortwährend während eines Erntebetriebs des Feldhäckslers statt. Mithin ist es für den Erntebetrieb erforderlich, dass ein Transportfahrzeug, das beispielsweise von einem Anhänger gebildet ist und einen Laderaum aufweist, neben oder hinter dem Feldhäcksler entlang fährt und sich auf diese Weise mit dem Feldhäcksler mit auf dem Feld bewegt. Hierzu kann das Transportfahrzeug beispielsweise von einer Zugmaschine, beispielsweise einem Schlepper, gezogen werden oder selbstfahrend ausgebildet sein, sodass es sich eigenständig bewegen kann.

Das Überladen des Ernteguts erfolgt mittels einer Überladeeinrichtung, die in der Technik auch als sogenannter "Auswurfkrümmer" bezeichnet wird. Hierzu wird das Erntegut beschleunigt und entlang der Überladeeinrichtung geleitet, bis es an einem endseitigen Auslass der Überladeeinrichtung (in der Technik auch als sogenanntes "Krümmerende" bezeichnet) ausgeworfen wird. Damit das Erntegut in dem Laderaum des Transportfahrzeugs landet, ist es erforderlich, die Ausrichtung der Überladeeinrichtung und die Position des Transportfahrzeugs relativ zu der Erntemaschine zu koordinieren, sodass zumindest im Wesentlichen das gesamte Erntegut in dem Laderaum des Transportfahrzeugs landet.

Die Überladeeinrichtung ist um eine horizontale Drehachse relativ zu einem Maschinenrahmen der Erntemaschine bewegbar an dem Maschinenrahmen gelagert, sodass eine Höhe, in der sich der endseitige Auslass der Überladeeinrichtung oberhalb eines jeweiligen Untergrunds befindet, veränderbar ist. Dies wird auch als "Ausheben" bezeichnet. Für diese vertikale Bewegung der Überladeeinrichtung kann beispielsweise und vorzugsweise ein Hubzylinder zum Einsatz kommen, der mit seinem einen Ende an dem Maschinenrahmen der Erntemaschine und mit seinem anderen Ende an der Überladeeinrichtung befestigt ist. Die Verdrehung der Überladeinrichtung relativ zu dem Maschinenrahmen um die Drehachse erfolgt mittels Betrieb des Hydraulikzylinders, infolge dessen sich dieser längt (Kolben fährt aus Zylinder aus) oder verkürzt (Kolben fährt in Zylinder ein). Gegebenenfalls und in bevorzugter Weise ist zusätzlich zu einer Verdrehbarkeit der Überladeeinrichtung um die genannte horizontale Drehachse ferner eine Verschwenkbarkeit um eine vertikale Schwenkachse möglich. Die Bewegbarkeit der Überladeeinrichtung dient dazu, den endseitigen Auslass der Überladeeinrichtung in der beschriebenen Weise relativ zu dem Transportfahrzeug auszurichten, damit das übergeladene Erntegut zumindest im Wesentlichen vollständig in dem Laderaum des Transportfahrzeugs landet.

Die bekannten Überladeeinrichtungen unterliegen dem Problem, dass sie aufgrund ihrer Größe und ihres Gewichts sowie ihrer einseitigen Anlenkung an dem Maschinenrahmen der Erntemaschine dazu neigen, im Zuge des Erntebetriebs der Erntemaschine in Schwingungen um die horizontale Drehachse zu geraten. Diese Schwingungen wirken sich insbesondere auf den endseitigen Auslass aus, der sich im Erntebetrieb der Erntemaschine deutlich merkbar "auf und ab" bewegt. Dies tritt insbesondere infolge von Unebenheiten in dem Untergrund auf, über den die Erntemaschine fährt, wodurch die Überladeeinrichtung angeregt wird (sog. "Untergrundanregung"). Infolge der Schwingungen der Überladeeinrichtung ist das "Zielen" auf den jeweiligen Laderaum des jeweiligen Transportfahrzeugs erschwert. Im Ergebnis kommt es daher regelmäßig zu einem Verlust von Erntegut, das nicht wie gewünscht in den Laderaum gelangt. Es besteht daher ein Interesse daran, die Schwingungen der Überladeeinrichtung zu minimieren.

Um dieses Problem zu lösen, ergibt sich aus der deutschen Offenlegungsschrift DE 10 2010 017 459 A1 ein System zur aktiven Dämpfung von Schwingungen der Überladeeinrichtung. Das System umfasst einen Sensor zur Erfassung einer auf die Überladeeinrichtung einwirkenden Schwingungsursache sowie eine Auswert- und Steuereinheit. Die Auswert- und Steuereinheit ist dazu eingerichtet, einen Aktor, mittels dessen sich die Überladeeinrichtung in ihrer Höhe verstellen lässt, in Abhängigkeit der erfassten Schwingungsursache zu betätigen, um Schwingungen der Überladeeinrichtung zu dämpfen. Auf diese Weise bietet der Stand der Technik bereits einen Ansatz, wie die Schwingung der Überladeeinrichtung gedämpft werden kann.

Trotz dieser Entwicklung verbleibt im Erntebetrieb der Erntemaschine eine ungewollte Schwingung der Überladeeinrichtung um die horizontale Drehachse, sodass sich insbesondere eine Bewegung des endseitigen Auslasses in vertikale Richtung ergibt. Dies führt wiederum in der beschriebenen Weise zu einem unerwünschten Verlust von Erntegut, das infolge der Bewegung des endseitigen Auslasses nicht wie gewünscht in dem Laderaum des jeweiligen Transportfahrzeugs landet.

Der vorliegenden Anmeldung liegt mithin die Aufgabe zugrunde, die Schwingung der Überladeeinrichtung während eines Erntebetriebs der Erntemaschine im Vergleich zum Stand der Technik mehr zu reduzieren.

Die zugrunde liegende Aufgabe wird erfindungsgemäß mittels einer selbstfahrenden landwirtschaftlichen Erntemaschine mit den Merkmalen des Anspruchs 1 gelöst. Vorteilhafte Ausgestaltungen ergeben sich aus den zugehörigen Unteransprüchen sowie der Beschreibung.

Die Erntemaschine ist bevorzugt von einem Feldhäcksler gebildet. Sie umfasst einen Maschinenrahmen, eine an dem Maschinenrahmen gelagerte Überladeeinrichtung sowie mindestens einen mit der Überladeeinrichtung wirkverbundenen hydraulischen Aktor. Die Überladeeinrichtung dient in der vorstehend beschriebenen Weise zur Überladung von verarbeitetem Erntegut auf ein Transportfahrzeug. Der hydraulische Aktor ist dazu vorgesehen und eingerichtet, die Überladeeinrichtung um eine horizontale Drehachse relativ zu dem Maschinenrahmen zu drehen. Diese Bewegung wird in der Technik auch als "ausheben" bezeichnet. Hierdurch ist es möglich, eine Position eines endseitigen Auslasses der Überladeeinrichtung, der sich an einem dem Maschinenrahmen abgewandten Ende der Überladeeinrichtung befindet, in vertikale Richtung relativ zu dem Maschinenrahmen zu verändern. Hierdurch ist es mittels des hydraulischen Aktors möglich, eine Höhe des endseitigen Auslasses der Überladeeinrichtung zu verstellen.

Hierzu kann der hydraulische Aktor beispielsweise und vorzugsweise von einem Hydraulikzylinder gebildet sein. Bei dieser Ausgestaltung ist bevorzugt ein erstes Ende des hydraulischen Aktors an dem Maschinenrahmen und ein dem ersten Ende gegenüberliegendes zweites Ende des hydraulischen Aktors an der Überladeeinrichtung gelagert. Auf diese Weise ist es besonders einfach möglich, mittels einer Veränderung einer Länge des hydraulischen Aktors (insbesondere durch Ein- und Ausfahren eines Kolbens aus einem Zylinder) einen Abstand zwischen seinen beiden Enden zu verändern und hierdurch die Überladeeinrichtung relativ zu dem Maschinenrahmen um die horizontale Drehachse zu drehen. Wie vorstehend bereits erläutert ist, ist mittels dieser Verdrehung die Verstellung der Höhe des endseitigen Auslasses der Überladeeinrichtung möglich, sodass aktiv der endseitige Auslass in seiner Position auf ein jeweiliges Transportfahrzeug abgestimmt werden kann. Mit anderen Worten verhilft der hydraulische Aktor dazu, mit der Überladeeinrichtung zu "zielen", sodass im Zuge der Überladung das über die Überladeeinrichtung abgegebene Erntegut möglichst vollständig in dem Laderaum des Transportfahrzeugs landet.

Die Erntemaschine umfasst ferner eine Steuer- und Regeleinrichtung zur Regelung eines Schwingungsverhaltens der Überladeeinrichtung mit dem Ziel, Schwingungen der Überladeeinrichtung zu dämpfen. Ferner umfasst die Erntemaschine ein mit dem hydraulischen Aktor wirkverbundenes Proportionalventil, dass zur Einstellung eines Volumenstroms eines Hydraulikfluids zu dem hydraulischen Aktor vorgesehen und eingerichtet ist. Die Einstellung des Volumenstroms ist bevorzugt stufenlos möglich. Mit anderen Worten ist das Proportionalventil dazu vorgesehen und eingerichtet, einen Volumenstrom von Hydraulikfluid, mit dem der hydraulische Aktor beschickt wird, einzustellen. Der Volumenstrom des Hydraulikfluids kann beispielsweise mittels einer Hydraulikpumpe bereitgestellt werden, die strömungstechnisch mit dem Proportionalventil verbunden ist. Auf diese Weise liegt an dem Proportionalventil fortwährend ein hydraulischer Druck an, wobei mittels des Proportionalventils ein Durchfluss des Hydraulikfluids (das heißt der Volumenstrom) zu dem hydraulischen Aktor freigegeben wird. Der Volumenstrom hängt dabei davon ab, wie weit das Proportionalventil geöffnet ist.

Die Steuer- und Regeleinrichtung ist dazu vorgesehen und eingerichtet, zur Dämpfung der Schwingungen der Überladeeinrichtung eine Stellgröße zur Ansteuerung des Proportionalventils zu ermitteln und das Proportionalventil entsprechend anzusteuern. Hierzu ist auf der Steuer- und Regeleinrichtung ein Regler abgebildet, mittels dessen die Stellgröße ermittelt wird. Anders ausgedrückt wird auf bzw. mittels der Steuer- und Regeleinrichtung die Regelung vorgenommen. Die Steuer- und Regeleinrichtung kann mit mindestens einem Sensor, vorzugsweise einer Mehrzahl von Sensoren, wirkverbunden sein, die jeweils Informationen erfassen, die in Form von Eingangsgrößen in Regelung einfließen und zur Ermittlung der Stellgröße dienen. Entsprechende Ausgestaltungen sind nachstehend gesondert erläutert.

Die Erntemaschine hat viele Vorteile. Insbesondere ermöglicht sie über das Proportionalventil eine besonders flexible und bedarfsgerechte Einwirkung auf die Überladeeinrichtung, damit deren Schwingung um die horizontale Drehachse reduziert bzw. gedämpft wird. Auf diese Weise kann die Überladeeinrichtung auch und insbesondere bei Unebenheiten in dem Untergrund, über den die Erntemaschine fährt, weitestgehend frei von ungewollten Bewegungen gehalten werden, sodass die Überladung des verarbeiteten Ernteguts auf das Transportfahrzeug zuverlässig stattfinden kann.

Die Dämpfung der Schwingungen der Überladeeinrichtung bietet zudem den Vorteil, dass die Belastung des Materials reduziert wird, sodass die Erntemaschine insgesamt weniger anfällig für Ausfälle und Wartungsarbeiten ist. Dem liegt die Überlegung zugrunde, dass die Schwingungen der Überladeeinrichtung auch dazu führen, dass in hohem Maße Kräfte auf den Maschinenrahmen und die Überladeeinrichtung einwirken und dadurch die mechanische Strukturen enorm belasten.

Als weiterer Vorteil ergibt sich, dass die Krafteinwirkung auf den Maschinenrahmen, die durch die Schwingungen der Überladeeinrichtung bedingt ist, reduziert wird, wodurch sich für den Maschinenführer der Erntemaschine der Fahrkomfort erhöht. Somit sind die Kräfte, die sich typischerweise während eines Erntebetriebs der Erntemaschine infolge von Schwingungen der Überladeeinrichtung ergeben, für den Maschinenführer in dem Führerhaus der Erntemaschine spürbar und werden in der Regel als unangenehm empfunden. Durch die Reduktion der Schwingungen kann dem entgegengewirkt werden.

Das Proportionalventil bietet zudem den Vorteil, dass die Regelbefehle der Steuer- und Regeleinrichtung besonders zügig, das heißt mit vergleichsweise hoher Frequenz, umgesetzt werden können, sodass der dem hydraulischen Aktor zugeleitete Volumenstrom des Hydraulikfluids schnell veränderbar und hierdurch mit hoher Geschwindigkeit auf prinzipbedingt sich während des Erntebetriebs ständig ändernde Einwirkungen, die eine Schwingung der Überladeeinrichtung zur Folge haben, reagiert werden kann. Wie vorstehend bereits dargelegt, handelt es sich bei diesen Einwirkungen insbesondere um Unebenheiten des Untergrundes, die die sog. Untergrundanregung der Überladeinrichtung zur Folge haben. Auch kann die Leitung des verarbeiteten Ernteguts entlang der Überladeeinrichtung letztere zum Schwingen anregen. Sofern das Proportionalventil in bevorzugter Weise stufenlos verstellbar ist, ist zudem der Volumenstrom des Hydraulikfluids präzise genau so einstellbar, dass das Verhalten des hydraulischen Aktors möglichst genau der Schwingung der Überladeeinrichtung entgegenwirkt und demzufolge das Schwingungsverhalten besonders effektiv gedämpft wird.

In einer bevorzugten Ausführungsform weist die Erntemaschine mindestens einen Sensor auf, der zur Erfassung von Informationen betreffend mindestens eines Parameter vorgesehen und eingerichtet ist, wobei entweder anhand des Parameters mindestens ein Zustand der Überladeeinrichtung indirekt beschreibbar ist oder der Parameter mindestens einen Zustand der Überladeeinrichtung direkt beschreibt. Bei diesem Zustand der Überladeeinrichtung kann es sich beispielsweise und vorzugsweise um ihre Drehposition bezogen auf die horizontale Drehachse relativ zu dem Maschinenrahmen, ihre Vertikalbeschleunigung oder einen kolbenseitigen Druck des hydraulischen Aktors handeln.

Sofern es sich bei dem Sensor beispielsweise um einen Sensor handelt, der zur Erfassung von Informationen betreffend eine Beschleunigung (insbesondere Vertikalbeschleunigung) der Überladeeinrichtung geeignet ist, ist dieser Sensor unmittelbar an der Überladeeinrichtung angeordnet, beispielsweise und vorzugsweise an einem dem Maschinenrahmen abgewandten Ende der Überladeeinrichtung. Mithin handelt es sich bei einem solchen Sensor um einen Sensor zur Erfassung von Informationen betreffend einen Parameter, der einen Zustand der Überladeeinrichtung direkt beschreibt. Ebenso ist es denkbar, dass der mindestens eine Sensor beispielsweise von einem Drucksensor gebildet ist, der Informationen betreffend einen Druck des hydraulischen Fluids an oder in dem hydraulischen Aktor erfasst, beispielsweise und vorzugsweise einen kolbenseitigen Druck. Mittels eines solchen Sensors werden mithin Informationen betreffend einen Parameter erfasst, anhand dessen ein Zustand der Überladeeinrichtung indirekt beschrieben werden kann bzw. beschreibbar ist, wobei der Parameter als solcher den Zustand der Überladeeinrichtung nicht direkt selbst beschreibt, sondern den Zustand des hydraulischen Aktors. Bevorzugt umfasst die Erntemaschine eine Mehrzahl von Sensoren, die jeweils zur Erfassung von Informationen betreffend jeweils einen Parameter geeignet sind, wobei weiter vorzugsweise diese Parameter voneinander unterschiedlich sind.

Die mittels des mindestens einen Sensors erfassten Informationen können in besonders bevorzugter Weise als Eingangsgröße für den Regler dienen, mittels dessen auf der Steuer- und Regeleinrichtung die Regelung des Schwingungsverhaltens der Überladeeinrichtung durchgeführt wird. Entsprechend ist es besonders vorteilhaft, wenn der mindestens eine Sensor in Daten übertragender Weise mit der Steuer- und Regeleinrichtung verbunden ist, sodass die Informationen an die Steuer- und Regeleinrichtung übertragbar sind. Diese Verbindung kann kabellos oder kabelgebunden vorliegen.

In besonders bevorzugter Ausgestaltung umfasst die Erntemaschine mindestens einen Sensor, der dazu vorgesehen und eingerichtet ist, Informationen betreffend eine Vertikalbeschleunigung der Überladeeinrichtung zu erfassen, wobei die Informationen einer Stelle der Überladeeinrichtung zugeordnet sind, an der der Sensor sich an der Überladeeinrichtung befindet. Beispielsweise kann der Sensor von einem Beschleunigungssensor oder einem Gyroskop gebildet sein. Vorzugsweise ist der Sensor an dem endseitigen Auslass der Überladeeinrichtung angeordnet, sodass mittels des Sensors Informationen betreffend die Vertikalbeschleunigung der Überladeeinrichtung an deren endseitigem Auslass erfassbar sind. Dieser endseitige Auslass wird in der Technik auch als "Auswurfklappe" bezeichnet. Da das Erntegut an dem endseitigen Auslass aus der Überladeeinrichtung austritt, sind Informationen betreffend die Beschleunigung an dieser Stelle in vertikale Richtung besonders interessant. Wird diese Beschleunigung reduziert, hat dies eine Beruhigung des Strahls von abgegebenem Erntegut zur Folge. Es ist denkbar, dass die Erntemaschine zwei Sensoren zur Erfassung von Informationen betreffend die Vertikalbeschleunigung der Überladeeinrichtung aufweist, wobei einer dieser Sensoren von einem Gyroskop und der andere Sensor von einem Beschleunigungssensor gebildet sind. In einem solchen Fall sind bevorzugt beide Sensoren im Bereich des endseitigen Auslasses der Überladeeinrichtung angeordnet.

Ferner kann eine solche Ausgestaltung der Erntemaschine vorteilhaft sein, die mindestens einen Sensor umfasst, der von einem Positionssensor gebildet ist. Der Positionssensor kann beispielsweise von einem Potentiometer gebildet sein. Der Positionssensor ist dazu vorgesehen und eingerichtet, Informationen betreffend eine Position der Überladeeinrichtung bezogen auf seine horizontale Drehachse zu erfassen. Auf diese Weise ist es möglich, festzustellen, in welcher Position sich die Überladeeinrichtung relativ zu dem Maschinenrahmen befindet. Mit "Position" ist in diesem Kontext im Sinne der vorliegenden Anmeldung eine Drehposition der Überladeeinrichtung bezogen auf die horizontale Drehachse gemeint.

Weiterhin kann eine solche Ausgestaltung vorteilhaft sein, bei der die Erntemaschine mindestens ein Sensor umfasst, der von einem Drucksensor gebildet ist. Der Drucksensor ist beispielsweise und vorzugsweise dazu vorgesehen und eingerichtet, Informationen betreffend einen Druck des Hydraulikfluids zu erfassen. Entsprechend ist es besonders vorteilhaft, wenn der hydraulische Aktor von einem, vorzugsweise doppelwirkenden, Hydraulikzylinder gebildet ist, dem der Drucksensor zugeordnet ist. Hierdurch ist es beispielsweise und vorzugsweise möglich, mittels des Drucksensors Informationen betreffend einen kolbenseitigen Druck des hydraulischen Aktors zu erfassen. Diese Informationen sind als Eingangsgröße für den auf der Steuer- und Regeleinrichtung ausgeführten Regler besonders sinnvoll verwertbar. Bevorzugt umfasst die Erntemaschine zwei Sensoren, die von Drucksensoren gebildet sind, wobei der hydraulische Aktor von einem doppelwirkenden Hydraulikzylinder gebildet ist, wobei der eine Drucksensor einem kolbenseitigen Druckraum (zur Erfassung von Informationen betreffend den kolbenseitigen Druck) und der andere Drucksensor dem zylinderseitigen Druckraum (zur Erfassung von Informationen betreffend den zylinderseitigen Druck) des hydraulischen Aktors zugeordnet sind.

Die Anordnung weiterer Sensoren an der Erntemaschine ist ohne Weiteres denkbar, wobei solche Sensoren beispielsweise zur Erfassung von Informationen betreffend
- eine Beschleunigung der Erntemaschine in Fahrtrichtung,
- eine Position der Überladeeinrichtung bezogen auf eine vertikale Schwenkachse,
- eine Winkelbeschleunigung der Überladeeinrichtung bezogen auf die vertikale Schwenkachse,
- einen stangenseitigen Druck des hydraulischen Aktors und/oder
- eine Vertikalbeschleunigung der Überladeeinrichtung an einem dem Maschinenrahmen zugewandten Ende (in der Technik auch als "Krümmerfuß" bezeichnet)
vorgesehen und eingerichtet sind. Die entsprechenden Informationen können ebenfalls der Steuer- und Regeleinrichtung zur Verfügung gestellt und dort als Eingangsgrößen für die durchgeführte Regelung verwendet werden.

Sofern die Erntemaschine mindestens einen Sensor (Sensor zur Erfassung von Informationen betreffend eine Vertikalbeschleunigung, Positionssensor, Drucksensor) gemäß vorstehender Erläuterung aufweist, ist es entsprechend besonders vorteilhaft, wenn die Steuer- und Regeleinrichtung derart betreibbar ist, dass die von dem jeweiligen Sensor erfassten und an die Steuer- und Regeleinrichtung übermitteln Informationen als Eingangsgrößen für den Regler zur Ermittlung der Stellgröße dienen. Auf diese Weise kann die Stellgröße zur Ansteuerung des Proportionalventils bedarfsgerecht ermittelt werden, damit die Steuer- und Regeleinrichtung das Schwingungsverhalten der Überladeeinrichtung effektiv dämpfen kann.

In besonders bevorzugter Ausgestaltung umfasst die Erntemaschine eine Mehrzahl von Sensoren, nämlich jeweils mindestens einen der als vorstehend vorteilhaft beschriebenen Arten von Sensoren, das heißt mindestens einen Sensor zur Erfassung von Informationen betreffend die Vertikalbeschleunigung der Überladeeinrichtung, mindestens einen Sensor in Form eines Positionssensors und mindestens einen Sensor in Form eines Drucksensors. Bei dieser Ausgestaltung ist die Steuer- und Regeleinrichtung dazu vorgesehen und eingerichtet, die Informationen der Sensoren gemeinsam als Eingangsgrößen für die auf der Steuer- und Regeleinrichtung durchgeführte Regelung zu verwenden und mithin anhand dieser Eingangsgrößen die Stellgröße zur Ansteuerung des Proportionalventils zu ermitteln. Hierbei ist die Steuer- und Regeleinrichtung vorzugsweise derart betreibbar, dass sie das Proportionalventil entsprechend der ermittelten Stellgröße ansteuern kann, sodass Druckspitzen des hydraulischen Aktors und Beschleunigungsspitzen der Überladeeinrichtung, die jeweils durch Untergrundanregungen der Erntemaschine bedingt sind, kompensiert werden. Mit anderen Worten nutzt die Steuer- und Regeleinrichtung die Informationen einer Mehrzahl von Sensoren, die jeweils als Eingangsgrößen für die Ermittlung der Stellgröße berücksichtigt werden, wobei die Stellgröße vorzugsweise mit der primären Zielsetzung ermittelt wird, Druckspitzen in dem hydraulischen Aktor und Beschleunigungsspitzen der Überladeeinrichtung (insbesondere an dessen endseitigem Auslass) zu dämpfen, sofern und soweit diese durch Untergrundanregungen der Erntemaschine bedingt sind. Diese Untergrundanregungen ergeben sich gemäß vorstehender Erläuterung insbesondere durch Unebenheiten in dem Untergrund, über den die Erntemaschine fährt. Diese Art der Regelung des Schwingungsverhaltens der Überladeeinrichtung hat sich als besonders vorteilhaft herausgestellt, um den endseitigen Auslass der Überladeeinrichtung im Vergleich zum Stand der Technik merklich ruhiger zu halten und dadurch das Zielen auf den Laderaum des jeweiligen Transportfahrzeugs zu erleichtern.

In besonders bevorzugter Ausgestaltung ist die Steuer- und Regeleinrichtung dazu vorgesehen und eingerichtet, die Regelung des Schwingungsverhaltens nach dem Prinzip einer H-unendlich-Regelung durchzuführen. Bei dieser Art der Regelung handelt es sich um eine äußerst robuste Regelung, bei der ein unbeabsichtigtes "Ausbrechen" der Stellgröße praktisch ausgeschlossen ist. Mit anderen Worten ist die Regelung bei dieser Ausgestaltung besonders unempfindlich gegenüber Modellungenauigkeiten, die prinzipbedingt bei jeder Regelung auftreten. Ferner ist die Regelgüte, mit der der auf der Steuer- und Regeleinrichtung ausgeführte Regler arbeitet, bei dieser Ausgestaltung besonders hoch sodass das Schwingungsverhaltens der Überladeeinrichtung besonders effektiv gedämpft werden kann.

Sofern die Regelung des Schwingungsverhaltens der Überladeeinrichtung nach dem H-unendlich-Prinzip durchgeführt wird, ist es besonders vorteilhaft, wenn die H-unendlich-Regelung nach dem Prinzip des "Mixed-Sensivity-Loop-Shaping" (siehe https://de.mathworks.com/help/robust/gs/using-mixsyn-for-h-infinity-loop-shaping.html) gestaltet ist. Hierbei ist die Steuer- und Regeleinrichtung bevorzugt derart betreibbar, dass mindestens eine Gewichtungsfunktion, die im Rahmen der H-unendlich-Regelung verwendet wird, eine Empfindlichkeit der Ansteuerung des Proportionalventils gewichtet. Hierbei wird vorzugsweise mittels der Gewichtungsfunktion eine Dynamik, mit der das Proportionalventil angesteuert wird, gewichtet.

Weiterhin kann es bei dieser Ausgestaltung vorteilhaft sein, wenn die Steuer- und Regeleinrichtung derart betreibbar ist, dass mittels mindestens einer im Rahmen der H-unendlich-Regelung verwendeten Gewichtungsfunktion die Stellgröße begrenzt wird, mit der das Proportionalventil ansteuerbar ist. Bei der Stellgröße handelt es sich bevorzugt um einen Steuerstrom, mit dem ein Aktor des Proportionalventils bestromt und infolgedessen das Proportionalventil verstellt werden.

Ferner kann es vorteilhaft sein, wenn die Steuer- und Regeleinrichtung derart betreibbar ist, dass mittels mindestens einer im Rahmen der H-unendlich-Regelung verwendeten Gewichtungsfunktion Modellunsicherheiten eines mathematischen Modells der Überladeeinrichtung gewichtet werden. Vorzugsweise sind die Modellunsicherheiten von Abweichungen des mathematischen Modells der Überladeeinrichtung im Vergleich zu der realen Überladeeinrichtung gebildet.

Unter Verwendung der Gewichtungsfunktionen, die bevorzugt in Kombination verwendet werden, wird die Stellgröße zur Ansteuerung des Proportionalventils besonders robust ermittelt, sodass sowohl die Stabilität des Systems gewährleistet ist. Ferner wird bei dieser Ausgestaltung eine besonders hohe Regelgüte erreicht, was sich im Vergleich zum Stand der Technik im Erntebetrieb der Erntemaschine in einer merklich geringeren Schwingung der Überladeeinrichtung niederschlägt.

Alternativ zu der Ausgestaltung der Regelung in Form einer H-unendlich-Regelung kann es ebenfalls vorteilhaft sein, wenn die Steuer- und Regeleinrichtung dazu vorgesehen und eingerichtet ist, die Regelung des Schwingungsverhaltens der Überladeeinrichtung nach dem Prinzip einer LQI-Regelung ("*linear-quadratic-integral control*", auch als "LQ-Regler" mit zusätzlichem integralen Anteil oder "Riccati-Regler" bezeichnet) durchzuführen. Auch diese Art der Regelung zeichnet sich durch ihre äußerst hohe Robustheit und hohe Regelgüte aus.

Sofern das Prinzip der LQI-Regelung zur Anwendung kommt, kann es besonders vorteilhaft sein, wenn die Regelung einen integrierend arbeitenden Regleranteil und einen proportional arbeitenden Regleranteil umfasst. Hierbei ist die Steuer- und Regeleinrichtung derart betreibbar, dass die Stellgröße von den beiden Regleranteilen gemeinsam ermittelt wird. Dabei dient der integrierend arbeitenden Regleranteil der stationären Genauigkeit, sodass beispielsweise für den Fall, dass die Erntemaschine ein Schlagloch überfährt, die Position der Überladeeinrichtung bezogen auf ihre horizontale Drehachse möglichst unverändert bleibt. Gleichzeitig dient der proportional arbeitenden Regleranteil der Dämpfung des Schwingungsverhaltens der Überladeeinrichtung und stellt mithin den eigentlichen Zustandsregler dar.

Sofern das Prinzip der LQI-Regelung zur Anwendung kommt, ist es des Weiteren besonders vorteilhaft, wenn die Regelung einen Zustandsbeobachter umfasst, der dazu vorgesehen und eingerichtet ist, mindestens einen Parameter der Überladeeinrichtung, der einen Zustand der Überladeeinrichtung beschreibt, sensorlos zu rekonstruieren und diesen mindestens einen Parameter als zusätzliche Eingangsgröße für die Ermittlung der Stellgröße zu berücksichtigen. Hierzu steht der Steuer- und Regeleinrichtung ein mathematisches Ersatzmodell der Überladeeinrichtung zur Verfügung, sodass der mindestens eine Parameter der Überladeeinrichtung unter Verwendung des mathematischen Ersatzmodells rekonstruiert werden kann. Auf diese Weise kann der Regelung eine Vielzahl von Eingangsgrößen zur Verfügung gestellt werden, die in bevorzugter Weise zu einem ersten Teil mittels mindestens eines Sensors, vorzugsweise mehrerer Sensoren, messtechnisch erfasst werden, und zu einem zweiten Teil mittels des Zustandsbeobachters sensorlos rekonstruiert werden.

In besonders bevorzugter Ausgestaltung ist das mathematische Ersatzmodell derart konzipiert, dass es in einem Mittelbereich der Überladeeinrichtung ein imaginäres Drehgelenk simuliert. Der Zustandsbeobachter kann anhand dieses Ersatzmodells eine Auslenkung des Drehgelenks und eine Winkelgeschwindigkeit an dem imaginären Drehgelenk berechnen und hierdurch die Schwingungen der Überladeeinrichtung, die aufgrund ihrer mechanischen Elastizität entstehen, abbilden. Derartige Informationen wären messtechnisch entweder nur sehr aufwendig oder gar nicht erfassbar, können aber über den Zustandsbeobachter rekonstruiert werden und dadurch als Eingangsgröße in die Regelung, nämlich für den proportional arbeitenden Regleranteil, einfließen.

Die Erfindung ist nachstehend anhand eines Ausführungsbeispiels, das in den Figuren dargestellt ist, näher erläutert. Es zeigt:
- Fig. 1:: Längsschnitt durch eine erfindungsgemäße selbstfahrende landwirtschaftliche Erntemaschine,
- Fig. 2:: Schematische Darstellung einer Überladeeinrichtung der Erntemaschine gemäß Figur 1,
- Fig. 3:: Eine Darstellung einer H-unendlich-Regelung, die auf einer Steuer- und Regeleinheit der Erntemaschine gemäß Figur 1 durchgeführt wird,
- Fig. 4:: Eine Darstellung einer LQI-Regelung, die auf einer Steuer- und Regeleinheit der Erntemaschine gemäß Figur 1 durchgeführt wird,
- Fig. 5:: Eine schematische Darstellung eines mathematischen Ersatzmodells der Überladeeinrichtung der Erntemaschine gemäß Figur 1.

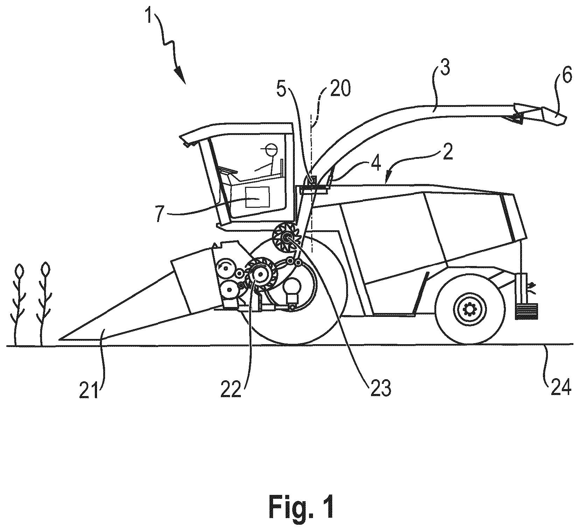

In einer beispielhaften Ausgestaltung der erfindungsgemäßen selbstfahrenden landwirtschaftlichen Erntemaschine **1,** die sich aus **Figur 1** ergibt, ist besagte Erntemaschine **1** von einem selbstfahrenden Feldhäcksler gebildet. Dieser umfasst einen Maschinenrahmen **2,** an dem eine Überladeeinrichtung **3** bewegbar gelagert ist. In dem gezeigten Beispiel ist die Überladeeinrichtung **3** relativ zu dem Maschinenrahmen **2** sowohl um eine horizontale Drehachse **5** als auch um eine vertikale Schwenkachse **20** bewegbar. Zum Antrieb der Bewegung bzw. Verdrehung der Überladeeinrichtung **3** relativ zu dem Maschinenrahmen **2** um die horizontale Drehachse **5** umfasst die Erntemaschine **1** einen hydraulischen Aktor **4,** der in dem gezeigten Beispiel von einem doppelwirkenden Hydraulikzylinder gebildet ist. Die Überladeeinrichtung **3** weist an ihrem dem Maschinenrahmen **2** abgewandten Ende einen endseitigen Auslass **6** auf, an dem verarbeitetes Erntegut aus der Überladeeinrichtung 3 austritt.

Für die Aufnahme und Verarbeitung von Erntegut umfasst die Erntemaschine **1** in dem gezeigten Beispiel an seinem vorderen Ende ein Maisgebiss **21,** mittels dessen Pflanzen, insbesondere Maispflanzen, abgeschnitten und zur weiteren Verarbeitung nachfolgenden Arbeitsorgane zugeführt werden können. Ferner umfasst die Erntemaschine 1 ein Häckselorgan **22,** mittels dessen die abgeschnittenen Pflanzen gehäckselt werden können. Hierbei werden beispielsweise Partikellängen von 5 mm erzeugt. Das gehäckselte und auf diese Weise verarbeitete Erntegut wird sodann einem Beschleunigungsorgan **23** zugeleitet, mittels dessen das verarbeitete Erntegut beschleunigt und entsprechend mit erhöhter Geschwindigkeit der Überladeeinrichtung **3** zugeführt wird. Das verarbeitete Erntegut strömt demzufolge mit erhöhter Geschwindigkeit entlang der Überladeeinrichtung **3** und tritt an dessen endseitigem Auslass **6** aus. Hierbei ist Überladeeinrichtung **3** relativ zu einem in den Figuren nicht dargestellten Transportfahrzeug ausgerichtet, sodass der von der Erntemaschine **1** abgegebene Erntegutstrom in einem Laderaum des Transportfahrzeugs landet.

Wie sich besonders gut anhand von **Figur 1** ergibt, ist die Überladeeinrichtung **3** lediglich an ihrem einen Ende an dem Maschinenrahmen **2** gelagert. Für die Überladung des Ernteguts an ein jeweiliges Transportfahrzeug weist sie eine vergleichsweise große Länge auf. Prinzipbedingt ist Überladeeinrichtung **3** daher für Schwingungen, nämlich insbesondere Schwingungen um die horizontale Drehachse **5,** anfällig. Diese treten insbesondere infolge von Untergrundanregungen auf, beispielsweise wenn die Erntemaschine **1** sich auf einem unebenen Untergrund **24** bewegt. Auch treten Schwingungen infolge des entlang der Überladeeinrichtung **3** strömenden verarbeiteten Ernteguts auf.

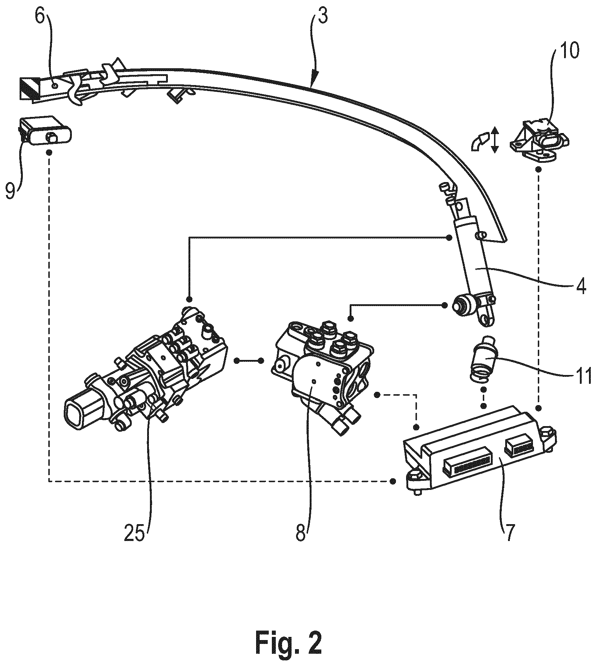

Um diese Schwingungen der Überladeeinrichtung **3** zu dämpfen, verfügt die Erntemaschine **1** über eine Steuer- und Regeleinrichtung **7,** die in dem gezeigten Beispiel in **Figur 1** schematisch in einem Führerhaus der Erntemaschine **1** dargestellt ist. Die Steuer- und Regeleinrichtung **7** kann sich jedoch auch anderer Stelle befinden, beispielsweise und vorzugsweise direkt an der Überladeeinrichtung **3,** beispielsweise an ihrer Unterseite. Die Steuer- und Regeleinrichtung **7** ist dazu vorgesehen und eingerichtet, das Schwingungsverhalten der Überladeeinrichtung **3** zu regeln, und zwar mit dem Ziel, die Schwingungen der Überladeeinrichtung **3** zu dämpfen. Hierzu ist die Steuer- und Regeleinrichtung **7** mit weiteren Komponenten der Erntemaschine **1** wirkverbunden. Diese ergeben sich besonders gut anhand von **Figur 2****.**

Mithin umfasst die Erntemaschine **1** ferner ein Proportionalventil **8,** das in Daten übertragender Weise mit der Steuer- und Regeleinrichtung **7** verbunden ist. In dem gezeigten Beispiel verfügt die Erntemaschine **1** ferner über eine Mehrzahl von Sensoren **9, 10, 11,** die zur Erfassung von Informationen betreffend Parameter geeignet sind, anhand derer ein Zustand der Überladeeinrichtung **3** (indirekt) beschreibbar ist oder anhand derer ein Zustand der Überladeeinrichtung **3** (direkt) beschreibbar ist. In dem gezeigten Beispiel umfasst die Erntemaschine **1** einen als Gyroskop ausgebildeten Sensor **9,** der dazu vorgesehen und eingerichtet ist, Informationen betreffend eine Vertikalbeschleunigung der Überladeeinrichtung **3** zu erfassen. Hier und vorzugsweise ist der Sensor **9** an dem endseitigen Auslass **6** ("Auswurfklappe") der Überladeeinrichtung **3** angeordnet, sodass er zur Erfassung von Informationen betreffend die Vertikalbeschleunigung des endseitigen Auslasses **6** geeignet ist. Der Sensor **9** ist in Daten übertragender Weise mit der Steuer-Regeleinrichtung **7** verbunden, sodass die mittels des Sensors **9** erfassten Informationen als Eingangsgrößen für die auf der Steuer- und Regeleinrichtung **7** ausgeführte Regelung nutzbar sind. Die Vertikalbeschleunigung der Überladeeinrichtung **3** an dem endseitigen Auslass ist ein Parameter, der den Zustand der Überladeeinrichtung **3** direkt beschreibt.

Ein zweiter Sensor **10** ist in dem gezeigten Beispiel von einem Positionssensor gebildet, der hier und vorzugsweise von einem Potentiometer gebildet ist. Anhand des Sensors **10** ist es mithin möglich, Informationen betreffend eine Position der Überladeeinrichtung **3** relativ zu dem Maschinenrahmen **2** zu erfassen. In dem gezeigten Beispiel handelt es sich bei dieser Position um eine Drehposition der Überladeeinrichtung **3** um die horizontale Drehachse **5.** Diese Drehposition ist entscheidend dafür, in welcher Höhe relativ zu dem Maschinenrahmen **2** sich der endseitige Auslass **6** der Überladeeinrichtung **3** befindet. Die mittels des zweiten Sensors **10** erfassten Informationen können ebenfalls über eine entsprechende Verbindung der Steuer- und Regeleinrichtung **7** zugeleitet und dort in Form von Eingangsgrößen für die durchgeführte Regelung verwendet werden.

Ein dritter Sensor **11** ist in dem gezeigten Beispiel von einem Drucksensor gebildet, mittels dessen Informationen betreffend einen kolbenseitigen Druck des hydraulischen Aktors **4** erfassbar sind. Der Sensor **11** ist ebenfalls in Daten übertragender Weise mit der Steuer- und Regeleinrichtung **7** verbunden, sodass die erfassten Informationen als Eingangsgrößen für die auf der Steuer- und Regeleinrichtung **7** durchgeführte Regelung verwendet werden können.

Die Steuer- und Regeleinrichtung **7** ist dazu vorgesehen und eingerichtet, zur Dämpfung der Schwingungen der Überladeeinrichtung **3** eine Stellgröße zu ermitteln. Diese Ermittlung wird anhand des auf der Steuer- und Regeleinrichtung **7** ausgeführten Reglers vorgenommen. Die Stellgröße wird zur Ansteuerung des Proportionalventils **8** verwendet. Mit anderen Worten dient die Steuer- und Regeleinrichtung **7** dazu, das Proportionalventil **8** anzusteuern und hierdurch auf das Schwingungsverhalten der Überladeeinrichtung **3** einzuwirken. Bei der ermittelten Stellgröße handelt es sich in dem gezeigten Beispiel um einen Steuerstrom, mittels dessen ein in den Figuren nicht separat dargestellter Aktor des Proportionalventils **8** bestromt und hierdurch des Proportionalventil 8 verstellt werden. Das Proportionalventil **8** ist strömungstechnisch mit einer Hydraulikpumpe **25** verbunden, die ein unter Druck stehendes Hydraulikfluid bereitstellt. Mittels einer Veränderung einer Stellung des Proportionalventils **8** ist ein Volumenstrom des Hydraulikfluids einstellbar, der dem hydraulischen Aktors **4** zugeleitet wird. Diese Einstellung ist hier und vorzugsweise stufenlos möglich.

Nach alldem ist die Steuer- und Regeleinrichtung **7** dazu geeignet, anhand der zur Verfügung gestellten Informationen der Sensoren **9, 10, 11** eine Stellgröße zur Ansteuerung des Proportionalventils **8** zu ermitteln und das Proportionalventil **8** entsprechend anzusteuern. Auf diese Weise kann die Steuer- und Regeleinrichtung **7** das Schwingungsverhalten der Überladeeinrichtung **3** regeln, und zwar mit dem Ziel, die Schwingungen der Überladeeinrichtung **3** zu dämpfen.

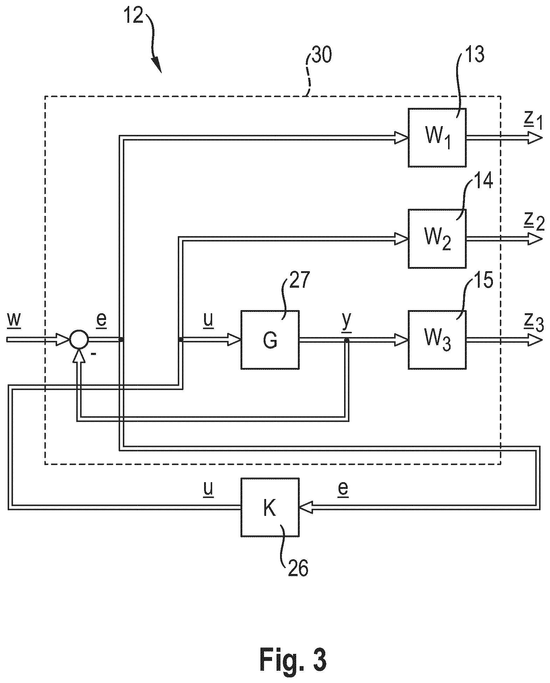

In einer bevorzugten Ausführungsform der Erntemaschine **1** kann gemäß **Figur 3** der auf der Steuer- und Regeleinrichtung **7** ausgeführte Regler nach dem Prinzip einer H-unendlich-Regelung **12** ausgebildet sein. Eine solche ist beispielhaft anhand des in **Figur 3** dargestellten Diagramms veranschaulicht. Die H-unendlich-Regelung **12** umfasst einen H-unendlich-Regler **26,** anhand dessen die Stellgröße ermittelt wird. Diese wird sodann einer erweiterten Regelstrecke **30** zugeleitet. Die erweiterte Regelstrecke **30** umfasst eine Regelstrecke **27** sowie insgesamt drei Gewichtungsfunktion **13, 14, 15.**

Die erste Gewichtungsfunktion **13** dient dazu, eine Empfindlichkeit der Ansteuerung des Proportionalventils **8** zu gewichten. Hier und vorzugsweise wird mittels der Gewichtungsfunktion **13** eine Dynamik, mit der das Proportionalventil **8** angesteuert wird, gewichtet. Die zweite Gewichtungsfunktion **14** dient dazu, die Stellgröße zu begrenzen, mit der das Proportionalventil **8** ansteuerbar ist. Die dritte Gewichtungsfunktion **15** dient schließlich dazu, Modellunsicherheiten eines mathematischen Modells der Überladeeinrichtung **3** zu gewichten. Diese Modellunsicherheiten sind hier und vorzugsweise von Abweichungen des mathematischen Modells der Überladeeinrichtung **3** im Vergleich zu der realen Überladeeinrichtung **3** gebildet. Die beschriebene Ausgestaltung der H-unendlich-Regelung **12** zeichnet sich durch eine äußerst hohe Robustheit und eine hohe Regelgüte aus.

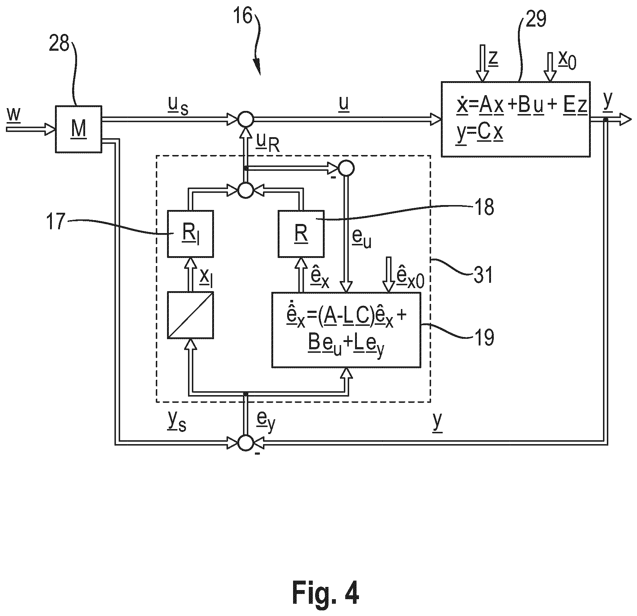

Alternativ zu der Durchführung der Regelung nach dem Prinzip der H-unendlich-Regelung **12** kann es ebenso vorteilhaft sein, wenn der auf der Steuer- und Regeleinrichtung **7** ausgeführte Regler nach dem Prinzip einer LQI-Regelung **16** ausgebildet ist. Diese ergibt sich beispielhaft anhand des in **Figur 4** dargestellten Diagramms. Demgemäß umfasst die LQI-Regelung **16** eine Vorsteuerung **28** und eine Regelstrecke **29,** die eine mathematische Modellierung des zu regelnden Systems verwendet. Die LQI-Regelung **16** umfasst ferner einen Pl-Zustandsregler **31,** der in dem gezeigten Beispiel in vorteilhafter Weise mit einem Zustandsbeobachter **19** ausgestattet ist. Der Pl-Zustandsregler **31** umfasst einen integrierend arbeitenden Regleranteil **17** (in der Technik auch als "Integralanteil" bezeichnet) und einen proportional arbeitenden Regleranteil **18** (in der Technik auch als "Proportionalanteil" bezeichnet). Der proportional arbeitende Regleranteil **18** reagiert proportional zu dem jeweils aktuellen Fehler (Differenz zwischen Sollwert und Istwert), während der integrierend arbeitende Regleranteil **17** die Summe vergangener Fehler über die Zeit betrachtet, um langfristige Genauigkeit und Stabilität des Systems sicherzustellen. Entsprechend ist die LQI-Regelung **16** besonders robust und weist eine hohe Regelgüte auf.

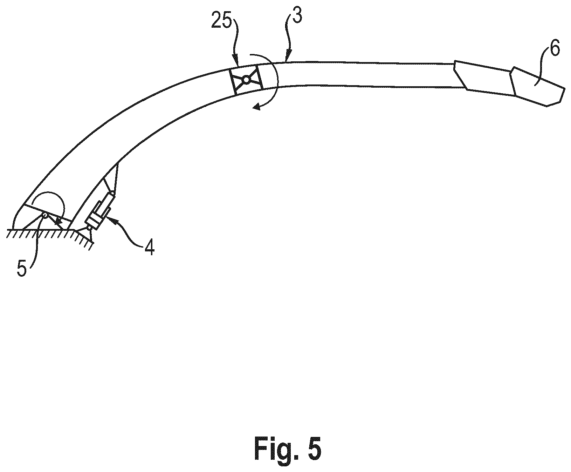

Der Zustandsbeobachter **19** dient dazu, sensorlos Parameter, die den Zustand der Überladeeinrichtung **3** beschreiben, zu rekonstruieren. In dem gezeigten Beispiel greift der Zustandsbeobachter **19** auf ein mathematisches Ersatzmodell der Überladeeinrichtung 3 zurück, dass beispielhaft anhand von **Figur 5** dargestellt ist. In diesem Ersatzmodell ist die Überladeeinrichtung **3** mathematisch rekonstruiert, sodass Parameter der Überladeeinrichtung **3** mathematisch berechnet werden können, ohne dass es hierfür an der realen Überladeeinrichtung **3** der Anordnung eines oder mehrerer Sensoren bedarf. In dem gezeigten Beispiel ist in einem Mittelbereich der Überladeeinrichtung **3** ein imaginäres Drehgelenk **5** simuliert, an dem eine Auslenkung der Überladeeinrichtung **3** sowie eine Winkelgeschwindigkeit rechnerisch ermittelt werden können. Auf diese Weise kann mittels Zustandsbeobachters **19** eine Vielzahl zusätzlicher Eingangsgrößen ermittelt werden, die zusätzlich zu tatsächlich messtechnisch erfassten Eingangsgrößen (mittels der vorstehend genannten Sensoren **9, 10, 11**) für die Regelung berücksichtigt werden können.

### Bezugszeichenliste

- 1: Erntemaschine
- 2: Maschinenrahmen
- 3: Überladeeinrichtung
- 4: hydraulischer Aktor
- 5: horizontale Drehachse
- 6: endseitiger Auslass
- 7: Steuer- und Regeleinrichtung
- 8: Proportionalventil
- 9: Sensor (Gyroskop)
- 10: Sensor (Positionssensor)
- 11: Sensor (Drucksensor)
- 12: H-unendlich-Regelung
- 13: Gewichtungsfunktion
- 14: Gewichtungsfunktion
- 15: Gewichtungsfunktion
- 16: LQI-Regelung
- 17: integrierend arbeitender Regleranteil
- 18: proportional arbeitender Regleranteil
- 19: Zustandsbeobachter
- 20: vertikale Schwenkachse
- 21: Maisgebiss
- 22: Häckselorgan
- 23: Beschleunigungsorgan
- 24: Untergrund
- 25: imaginäres Drehgelenk
- 26: H-unendlich-Regler
- 27: Regelstrecke
- 28: Vorsteuerung
- 29: Regelstrecke
- 30: erweiterte Regelstrecke
- 31: Pl-Zustandsregler

## Patentansprüche

1. Selbstfahrende landwirtschaftliche Erntemaschine (1), insbesondere Feldhäcksler, umfassend
- einen Maschinenrahmen (2),
- eine an dem Maschinenrahmen (2) gelagerte Überladeeinrichtung (3) zur Überladung von verarbeitetem Erntegut an ein Transportfahrzeug,
- mindestens einen mit der Überladeeinrichtung (3) wirkverbundenen hydraulischen Aktor (4),
wobei mittels des hydraulischen Aktors (4) die Überladeeinrichtung (3) um eine horizontale Drehachse (5) relativ zu dem Maschinenrahmen (2) verdrehbar ist und dadurch eine Position eines endseitigen Auslasses (6) der Überladeeinrichtung (3) in vertikale Richtung relativ zu dem Maschinenrahmen (2) veränderbar ist,
**gekennzeichnet durch**
- eine Steuer- und Regeleinrichtung (7) zur Regelung eines Schwingungsverhaltens der Überladeeinrichtung (3) mit dem Ziel, Schwingungen der Überladeeinrichtung (3) zu dämpfen,
- ein mit dem hydraulischen Aktor (4) wirkverbundenes Proportionalventil (8) zur Einstellung eines Volumenstroms von Hydraulikfluid zu dem hydraulischen Aktor (4),
wobei die Steuer- und Regeleinrichtung (7) dazu vorgesehen und eingerichtet ist, zur Dämpfung der Schwingungen der Überladeeinrichtung (3) eine Stellgröße zur Ansteuerung des Proportionalventils (8) zu ermitteln und das Proportionalventil (8) entsprechend anzusteuern.

2. Erntemaschine (1) nach Anspruch 1, **gekennzeichnet durch** mindestens einen Sensor (9, 10, 11) zur Erfassung von Informationen betreffend mindestens einen Parameter, anhand dessen mindestens ein Zustand der Überladeeinrichtung (3), insbesondere ihre Position relativ zu dem Maschinenrahmen (2) oder ihre Beschleunigung, beschreibbar ist oder der mindestens einen Zustand der Überladeeinrichtung (3), insbesondere ihre Position relativ zu dem Maschinenrahmen (2) oder ihre Beschleunigung, beschreibt.

3. Erntemaschine (1) nach einem der vorhergehenden Ansprüche, **gekennzeichnet durch** mindestens einen Sensor (9), der an der Überladeeinrichtung (3) angeordnet und dazu vorgesehen und eingerichtet ist, Informationen betreffend eine Vertikalbeschleunigung der Überladeeinrichtung (3) zu erfassen, wobei vorzugsweise der Sensor (9) an dem endseitigen Auslass (6) angeordnet ist, sodass er zur Erfassung von Informationen betreffend die Vertikalbeschleunigung des endseitigen Auslasses (6) geeignet ist, wobei vorzugsweise der Sensor (9) von einem Gyroskop oder einem Beschleunigungssensor gebildet ist.

4. Erntemaschine (1) nach einem der vorhergehenden Ansprüche, **gekennzeichnet durch** mindestens einen Sensor (10), der von einem Positionssensor gebildet ist, mittels dessen Informationen betreffend eine Position der Überladeeinrichtung (3) bezogen auf seine horizontale Drehachse (5) erfassbar sind.

5. Erntemaschine (1) nach einem der vorhergehenden Ansprüche, **gekennzeichnet durch** mindestens einen Sensor (11), der von einem Drucksensor gebildet ist, wobei der hydraulische Aktor (4) von einem, vorzugsweise doppelwirkenden, Hydraulikzylinder gebildet ist, wobei mittels des Sensors (11) Informationen betreffend einen kolbenseitigen Druck des hydraulischen Aktors (4) erfassbar sind.

6. Erntemaschine (1) nach einem der Ansprüche 2 bis 5, **dadurch gekennzeichnet, dass** die erfassten Informationen an die Steuer- und Regeleinrichtung (7) leitbar sind, wobei letztere derart betreibbar ist, dass die Informationen als Eingangsgrößen für die Ermittlung der Stellgröße dienen.

7. Erntemaschine (1) nach den Ansprüchen 3 bis 5, **dadurch gekennzeichnet, dass** die Steuer- und Regeleinrichtung (7) dazu vorgesehen und eingerichtet ist, die Informationen
i) des Sensors (9) zur Erfassung von Informationen betreffend die Vertikalbeschleunigung der Überladeeinrichtung (3),
ii) des Positionssensors (10) betreffend die Position der Überladeeinrichtung (3) bezogen auf seine horizontale Drehachse (5) und
iii) des Drucksensors (11) betreffend den kolbenseitigen Druck des hydraulischen Aktors (4),
als Eingangsgrößen zu verwenden und anhand dieser Eingangsgrößen die Stellgröße zur Ansteuerung des Proportionalventils (8) zu ermitteln und das Proportionalventil (8) damit derart anzusteuern, dass Druckspitzen des hydraulischen Aktors (4) und Beschleunigungsspitzen der Überladeeinrichtung (3), die jeweils durch Untergrundanregungen der Erntemaschine (1) bedingt sind, kompensiert werden.

8. Erntemaschine (1) nach einem der vorhergehenden Ansprüche, **dadurch gekennzeichnet, dass** die Steuer- und Regeleinrichtung (7) dazu vorgesehen und eingerichtet ist, die Regelung des Schwingungsverhaltens der Überladeeinrichtung nach dem Prinzip einer H-unendlich-Regelung (12) durchzuführen.

9. Erntemaschine (1) nach Anspruch 8, **dadurch gekennzeichnet, dass** die Steuer- und Regeleinrichtung (7) derart ausgelegt ist, dass mittels mindestens einer im Rahmen der H-unendlich-Regelung (12) verwendeten Gewichtungsfunktion (13) eine Empfindlichkeit des Proportionalventils (8) gewichtet wird, wobei vorzugsweise mittels der Gewichtungsfunktion (13) eine Dynamik, mit der das Proportionalventil (8) angesteuert wird, gewichtet wird.

10. Erntemaschine (1) nach einem der Ansprüche 8 oder 9, **dadurch gekennzeichnet, dass** die Steuer- und Regeleinrichtung (7) derart ausgelegt ist, dass mittels mindestens einer im Rahmen der H-unendlich-Regelung (12) verwendeten Gewichtungsfunktion (14) die Stellgröße begrenzt wird, mit der das Proportionalventil (8) ansteuerbar ist, wobei vorzugsweise die Stellgröße ein Steuerstrom ist.

11. Erntemaschine (1) nach einem der Ansprüche 8 bis 10, **dadurch gekennzeichnet, dass** die Steuer- und Regeleinrichtung (7) derart ausgelegt ist, dass mittels mindestens einer im Rahmen der H-unendlich-Regelung (12) verwendeten Gewichtungsfunktion (15) Modellunsicherheiten eines mathematischen Modells der Überladeeinrichtung (3) gewichtet werden, wobei vorzugsweise die Modellunsicherheiten von Abweichungen des mathematischen Modells der Überladeeinrichtung (3) zu der realen Überladeeinrichtung (3) gebildet sind.

12. Erntemaschine (1) nach einem der Ansprüche 1 bis 7, **dadurch gekennzeichnet, dass** die Steuer- und Regeleinrichtung (7) dazu vorgesehen und eingerichtet ist, die Regelung des Schwingungsverhaltens der Überladeeinrichtung (3) nach dem Prinzip einer LQI-Regelung (16) durchzuführen.

13. Erntemaschine (1) nach Anspruch 12, **dadurch gekennzeichnet, dass** die Regelung einen integrierend arbeitenden Regleranteil (17) und einen proportional arbeitenden Regleranteil (18) umfasst, wobei die Steuer- und Regeleinrichtung (7) derart eingerichtet ist, dass die Stellgröße zusammen von den beiden Regleranteilen (17, 18) ermittelt wird.

14. Erntemaschine (1) nach einem der Ansprüche 12 oder 13, **dadurch gekennzeichnet, dass** die Regelung einen Zustandsbeobachter (19) umfasst, der dazu vorgesehen und eingerichtet ist, mindestens einen Parameter, der einen Zustand der Überladeeinrichtung (3) beschreibt, unter Verwendung eines mathematischen Ersatzmodells sensorlos zu rekonstruieren, wobei die Steuer- und Regeleinrichtung (7) betreibbar ist, den rekonstruierte Parameter als zusätzliche Eingangsgröße für die Ermittlung der Stellgröße zu berücksichtigen.

15. Erntemaschine (1) nach Anspruch 14, **dadurch gekennzeichnet, dass** der Steuer- und Regeleinrichtung (7) das mathematische Ersatzmodell der Überladeeinrichtung (3) zur Verfügung steht, vorzugsweise auf einem Speicher der Steuer- und Regeleinrichtung (7), sodass der Zustandsbeobachter (19) das mathematische Ersatzmodell für die Rekonstruktion des mindestens einen Parameter verwenden kann.
